# EUROPÄISCHE PATENTSCHRIFT

(11) **EP 0 288 946 B1**
(45) Veröffentlichungstag und Bekanntmachung des Hinweises auf die Patenterteilung: **12.01.1994**
(21) Anmeldenummer: 88106561.9
(22) Anmeldetag: 23.04.1988
(51) Int. Cl.: G01N 35/00, B01L 7/00

(54) **Vorrichtung zum Transport von teiltemperiertem, streifenförmigem Testgut**
Device for transporting partly temperature-conditioned strip-like test objects
Dispositif pour amener des objets en forme de bande partiellement tempérés

(30) Priorität: 29.04.1987 DE 3714294
(43) Veröffentlichungstag der Anmeldung: 02.11.1988
(73) Patentinhaber: HOECHST AKTIENGESELLSCHAFT, 65926 Frankfurt am Main (DE)
(72) Erfinder: Gross, Jürgen, Dr., D-6238 Hofheim am Taunus (DE)

(56) Entgegenhaltungen:
- EP-A- 0 054 849
- US-A- 3 036 893
- US-A- 4 647 431
- PATENT ABSTRACTS OF JAPAN vol. 7, no. 127 (P-201)(1272) 03 Juni 1983, & JP-A-58 044352

## Beschreibung

Gegenstand der Erfindung ist eine Vorrichtung zum Transport, von teiltemperiertem, streifenförmigem Testgut unter eine Meßeinrichtung mittels eines Transportbandes zur Aufnahme des Meßgutes.

Es ist bekannt, Körperflüssigkeiten mittels Teststreifen auf ihre Konzentration, z.B. von Zucker, Bilirubin, Urobilinogen, pH-Wert usw. zu untersuchen. Die Teststeifen weisen mehrere Testfelder mit spezifischen Nachweisreagenzien auf, die mit den in der Körperflüssigkeit enthaltenen Stoffen ganz bestimmte Färbungen hervorrufen. Es ist ferner bekannt, solche Teststreifen photometrisch, insbesondere remissionsphotometrisch mittels Mehrkanalphotometer zu analysieren. Solche Mehrkanalphotometer weisen eine Vorrichtung zum Zuführen der Teststreifen auf. Diese besteht gemäß europäischer Patentschrift 00 54 849 aus einem Transportband, das unter dem Meßkopf des Mehrkanalphotometers durchgeführt wird. Auf dem Transportband befinden sich Teststreifen, die quer zur Bewegungsrichtung des Transportbandes auf diesem abgelegt sind und schrittweise zum Meßkopf transportiert werden. Dabei hat sich herausgestellt, daß die Inkubationszeiten der einzelnen Testfelder unterschiedlich sind. Während einige Testfelder bei einer gewählten Transportgeschwindigkeit bis zum Zeitpunkt der Messung schon fast ausreagiert haben und somit eine Konzentrationsänderung nicht mehr anzeigen, reicht für andere Testfelder diese Zeit nicht aus, insbesondere, wenn geringe Konzentrationen vorliegen.

Aus der US-Patentschrift 3 036 893 ist bekannt, Farbfelder, die auf einem Transportband angeordnet sind, mit Wärme zu behandeln. Hierfür durchläuft das Transportband eine Heizzone, die aus ober- und unterhalb des Transportbandes angeordneten Heizeinrichtungen besteht.

Der Erfindung liegt demnach die Aufgabe zugrunde, eine Vorrichtung zu schaffen, die es gestattet, die Reaktionszeiten der einzelnen Testfelder aneinander anzupassen bzw. die Nachweisempfindlichkeit einzelner Testfelder zu steigern.

Die Aufgabe wird durch eine Transporteinrichtung gemäß Anspruch 1 gelöst.

Die Heizeinrichtung kann aus mehreren Heizstrahlern die hintereinander in Bewegungsrichtung des Transportbandes angeordnet und mit einem Temperaturregler versehen sind bestehen oder Heizbändern mit unterschiedlichem Abstand zum Transportband. Auf der Haltevorrichtung können entsprechend der Zahl der Testfelder eine bis neun Heizeinrichtung senkrecht zur Bewegungsrichtung des Transportbandes angeordnet sein.

Die Vorteile der Erfindung sind unter anderem darin zu sehen, daß durch Bestrahlen der Testfelder die Reaktion gezielt beschleunigt werden kann. Dadurch kann nicht nur die Empfindlichkeit der Messung um den Faktor 3 bis 4 gesteigert werden, sondern such der Streifendurchsatz in der Meßapparatur.

Die Erfindung wird im folgenden anhand von lediglich einen Ausführungsweg darstellenden Figuren näher erläutert.
Es zeigt
Figur 1 einen Teil der Transporteinrichtung in Draufsicht und
Figur 2 den Schnitt II - II von Figur 1.
Figur 3 den Schnitt III - III von Figur 1, jedoch mit Heizband als Heizeinrichtung.

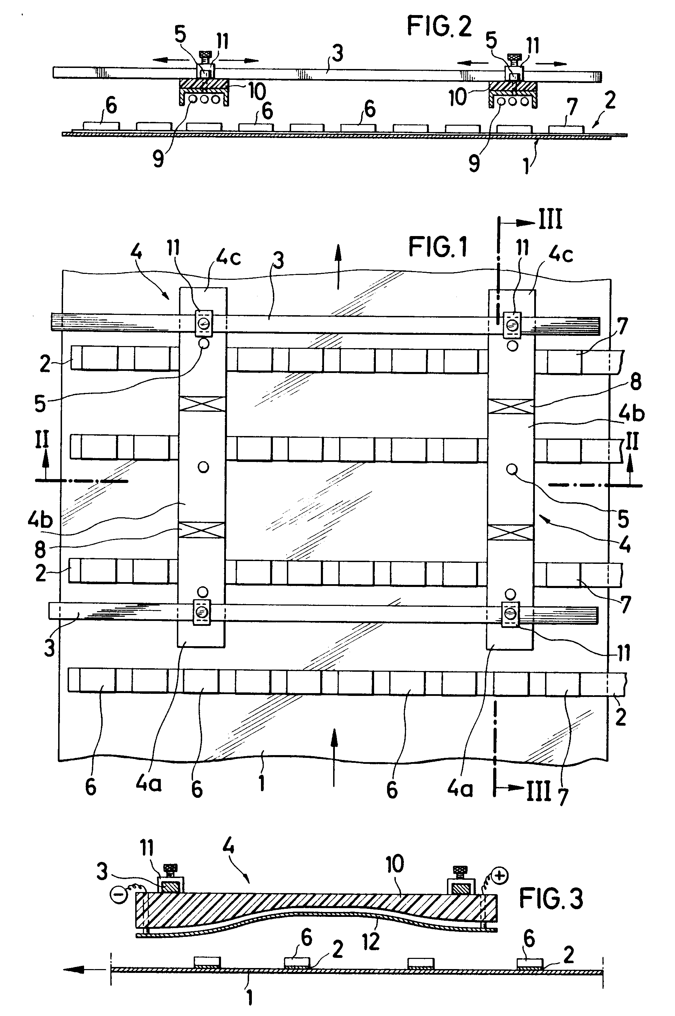

Der auf dem Transportband 1 abgelegte Teststreifen 2 mit neun Testfeldern 6 und einem Farbkompensationsfeld 7 wird schrittweise unter den Meßkopf des Zehnkanalphotometers (nicht dargestellt) transportiert. Über dem Transportband und quer zur Bewegungsrichtung, die mit Pfeilen angedeutet ist, ist eine Haltevorrichtung 3 vorgesehen, auf der mindestens eine Heizeinrichtung 4 verschiebbar angeordnet ist. Die Heizeinrichtung 4 kann aus mehreren Heizstrahlern 4a, 4b, 4c bestehen, die hintereinander in Bewegungsrichtung des Transportbandes 1 angeordnet sind. Die einzelnen Heizstrahler mit den Heizstäben 9 sind mit einem Temperaturregler 5 versehen und voneinander durch Isolatoren 8 und gegenüber der Haltevorrichtung 3 durch Isolatoren 10 getrennt. 11 deutet die Befestigung der Heizeinrichtung 4 an der Haltevorrichtung 3 an. Gemäß Figur 3 besteht die Heizeinrichtung 4 aus einem Heizband 12 das sich in Bewegungsrichtung des Transportbandes erstreckt und von diesem unterschiedlichen Abstand aufweist.

## Patentansprüche

1. Vorrichtung zum Transport von streifenförmigem Testgut mit mehreren Testfeldern, die unterschiedliche Reaktionszeiten benötigen, zum Anpassen der Reaktionszeit der einzelnen Testfelder untereinander und zum Steigern der Nachweisempfindlichkeit der einzelnen Testfelder, dadurch gekennzeichnet, daß quer zur Bewegungsrichtung eines Transportbandes (1) für das Testgut (2) eine Haltevorrichtung (3) vorgesehen ist, auf der Heizeinrichtungen (4a, 4b, 4c), die sich über gleiche Testfelder (6) mehrerer Teststreifen (2) erstrecken, von Testfeld zu Testfeld verschiebbar angeordnet sind, die Temperaturregler (5) aufweisen.

2. Vorrichtung nach Anspruch 1, dadurch gekennzeichnet, daß auf der Haltevorrichtung (3) eine bis neun Heizeinrichtungen (4) angeordnet sind.

3. Vorrichtung nach Anspruch 1, dadurch gekennzeichnet, daß die Heizeinrichtungen (4) aus einem sich in Bewegungsrichtung des Transportbandes erstreckenden Heizband mit unterschiedlichem Abstand zum Transportband besteht.

## Claims

1. An apparatus for the transport of test material in strip form and having a plurality of test zones which require different reaction times, for matching the reaction time of the individual test zones to one another and for increasing the detection sensitivity of the individual test zones, wherein a retaining device (3) is provided transverse to the direction of movement of a conveyor belt (1) for the test material (2), on which retaining device heating devices (4a, 4b, 4c) which extend over identical test zones (6) of a plurality of test strips (2) and have temperature controllers (5) are arranged so as to be displaceable from test zone to test zone.

2. An apparatus as claimed in claim 1, wherein one to nine heating devices (4) are arranged on the retaining device (3).

3. An apparatus as claimed in claim 1, wherein the heating devices (4) consist of a band heater extending in the direction of movement of the conveyor belt, with varying distance from the conveyor belt.

## Revendications

1. Dispositif de transport de matériaux d'essai sous forme de bandes, comportant plusieurs zones d'essai nécessitant des temps de réaction différents, en vue de l'ajustement des temps de réaction de chaque zone d'essai les uns avec les autres, et de l'augmentation de la sensibilité de l'indication de chaque zone d'essai, caractérisé en ce que transversalement à la direction de déplacement d'une bande (1) de transport pour les matériaux (2) d'essai, est prévu un dispositif (3) de retenue sur lequel sont disposées des installations (4a 4b 4c) de chauffage mobiles d'une zone d'essai à l'autre et qui s'étendent sur la même zone (6) d'essai commune à plusieurs bandes (2) d'essai, et qui présentent des régulateurs (5) de température.

2. Dispositif selon la revendication 1, caractérisé en ce que sur chaque dispositif (3) de retenue sont disposées de une à neuf installations de chauffage (4)

3. Dispositif selon la revendication 1, caractérisé en ce que l'installation (4) de chauffage se compose d'un collier de chauffage s'étendant dans la direction du déplacement de la bande de transport, et présentant un écartement variable vis-à-vis de la bande de transport.
